# EUROPÄISCHE PATENTSCHRIFT

(11) **EP 3 396 285 B1**
(45) Veröffentlichungstag und Bekanntmachung des Hinweises auf die Patenterteilung: **06.11.2019**
(21) Anmeldenummer: 18168868.0
(22) Anmeldetag: 24.04.2018
(51) Int. Cl.: F26B 3/04, F26B 21/04, F26B 21/06, F26B 23/00

(54) **DURCHLAUFTROCKNER MIT EINEM WÄRMEÜBERTRAGER**
CONTINUOUS FLOW DRIER WITH A HEAT EXCHANGER
SÉCHOIR CONTINU POURVU D'UN ÉCHANGEUR THERMIQUE

(30) Priorität: 24.04.2017 DE 102017108699
(43) Veröffentlichungstag der Anmeldung: 31.10.2018
(73) Patentinhaber: Stela Laxhuber GmbH, 84323 Massing (DE)
(72) Erfinder: Laxhuber, Thomas Christian, 84323 Massing (DE); Latein, Tobias, 84567 Erlbach (DE)
(74) Vertreter: Rothkopf, Ferdinand

(56) Entgegenhaltungen:
- EP-A1- 2 649 393
- WO-A1-2014/168559
- WO-A1-2015/127490
- US-A- 2 722 752

## Beschreibung

### Hintergrund der Erfindung

Die Erfindung betrifft einen Durchlauftrockner zum Trocknen eines Gutes mittels Warmluft mit einer Frischluftzuführeinrichtung zum Zuführen von Frischluft als Zuluft, einer Abluftrückführeinrichtung zum Abführen von Abluft und Rückführen als Zuluft und einem Wärmeübertrager, durch den hindurch zum einen Frischluft und zum anderen Abluft geführt sind, zum Übertragen von Abwärme der Abluft in die Frischluft.

Durchlauftrockner sind Trockner, bei denen zu trocknendes Gut kontinuierlich oder chargenweise durch den Trockner transportiert wird. Ein solcher Trockner ist insbesondere ein Bandtrockner, der mittels eines Bandes das zu trocknende Gut durch den Durchlauftrockner fördert. Das zu trocknende Gut, zum Beispiel Klärschlamm, Holzspäne, Hackschnitzel, RDF (refuse-derived fuel), SSW (solid shredded waste), MSW (municipal solid waste), Hausabfälle, Gras oder landwirtschaftliche Produkte und Nebenprodukte, wie Zuckerrübenschnitzel, ist dabei zunächst feucht bzw. nass. Das Gut wird getrocknet, indem ihm Feuchtigkeit mittels Warmluft entzogen wird. Die Warmluft wird extra erzeugt, indem insbesondere Luft aus der Umgebung des Durchlauftrockners erwärmt wird. Beim Erwärmen der Luft sinkt die relative Luftfeuchte dieser Luft, die Luft wird "trockener". Diese Warmluft mit niedriger relativer Luftfeuchte durchströmt dann im Durchlauftrockner das zu trocknende Gut und umströmt dessen Bestandteile.

Zum Erwärmen der Luft zu Warmluft wird selbstverständlich Energie benötigt. Diese Energie ist verloren, wenn die erzeugte Warmluft nach dem Trocknen des Gutes in die Umgebung entlassen wird. Es sind daher erste Ansätze bekannt, um die Warmluft im Kreislauf zu führen.

Das zu trocknende Gut wird zugleich in einer Transportrichtung durch den Durchlauftrockner gefördert und durchläuft dabei vorzugsweise mehrere Sektionen. Die einzelne Sektion unterteilt den Durchlauftrockner räumlich. Die Sektionen können dazu voneinander luftströmungsmäßig weitgehend getrennt sein. Es sind so in den Sektionen unterschiedliche Luftströme möglich, die je unterschiedliche relative Luftfeuchten und unterschiedliche Temperaturen aufweisen können.

Zum Zuführen von Luft zum Durchlauftrockner ist eine Frischluftzuführeinrichtung vorgesehen, die aus der Umgebung entnommene, in der Regel trockene Frischluft dem Durchlauftrockner als Zuluft zuführt.

Bei solchen Durchlauftrocknern ist es ferner bekannt eine Abluftrückführeinrichtung vorzusehen, mittels der Abluft aus dem Trocknungsvorgang abgezogen und dann zumindest teilweise in den Durchlauftrockner zurückgeführt wird. Ein Teil der Abluft wird dabei durch einen Wärmeübertrager geleitet, durch den auch zugeführte Frischluft geführt wird. So kann thermische Energie bzw. Abwärme von der Abluft an die Zuluft übergeführt werden.

Aus WO 2014 168559 A1 ist ein Stufentrockner bekannt, in den Frischluft geführt ist. Die Frischluft ist durch einen externen Wärmetauscher bzw. Wärmeübertrager geführt, durch den auch eine aus dem Stufentrockner abgeführte Abluft als gesättigter Luftstrom geführt ist. Der durch den Wärmetauscher geführte Luftstrom ist dann als Zuluft wieder in den Stufentrockner rückgeführt. Nach dem Hindurchleiten des Luftstroms durch den Wärmetauscher ist ein daraus abgeschiedenes Kondensat abgetrennt.

### Zugrundeliegende Aufgabe

Der Erfindung liegt die Aufgabe zugrunde, einen Durchlauftrockner zum Trocknen eines Gutes mittels Warmluft zu schaffen, der im Vergleich zu bekannten Durchlauftrocknern eine weitergehende Energieeinsparung möglich macht.

### Erfindungsgemäße Lösung

Diese Aufgabe ist erfindungsgemäß mit einem Durchlauftrockner zum Trocknen eines Gutes mittels Warmluft nach Anspruch 1 gelöst, mit einer Frischluftzuführeinrichtung zum Zuführen von Frischluft als Zuluft, einer Abluftrückführeinrichtung zum Abführen von Abluft und Rückführen als Zuluft und einem Wärmeübertrager, durch den hindurch zum einen Frischluft und zum anderen Abluft geführt sind, zum Übertragen von Abwärme der Abluft in die Frischluft. Die abgeführte Abluft ist unten in den Wärmeübertrager zugeführt.

Die erfindungsgemäße Lösung bringt den Vorteil mit sich, dass die in den Wärmeübertrager einströmende Abluft als erstes von unten nach oben strömt und sich dabei entgegen der Richtung der Schwerkraft bewegt. Die Abluft strömt also aufwärts, während die Schwerkraft abwärts wirkt. Die Schwerkraft wirkt dabei auf Staubpartikel, welche sich in der Abluft befinden und insbesondere aus dem zuvor getrockneten Gut stammen. Diese Staubpartikel werden mit der erfindungsgemäßen Lösung, das hat sich überraschenderweise gezeigt, in besonders starkem Umfang abgeschieden und können so aus dem Wärmeübertrager abgeführt werden, ohne diesen zu verschmutzen oder zu versotten. Die erfindungsgemäße Lösung verbessert also die Selbstreinigung des Wärmeübertragers.

Die beiden Ströme von Abluft und Zuluft sind erfindungsgemäß an dem Wärmeübertrager mittels einer Trennfläche voneinander getrennt. An der Trennfläche strömt dann auf der einen Seite die Abluft und auf der anderen Seite die Zuluft entlang. Durch die Trennfläche hindurch wird Wärmeenergie der Abluft an die Zuluft abgegeben. Die Abwärme der Abluft erwärmt so die dem Durchlauftrockner zugeführte Luft, die insbesondere Frischluft ist. Somit wird Wärmeenergie aus der Abluft zurückgewonnen. Zugleich sind die Luftströme von Abluft und Zuluft feuchtetechnisch voneinander getrennt. Die in der Abluft enthaltene Feuchte kann also nicht in die Zuluft übertreten.

Vorteilhaft ist der Wärmeübertrager derart dimensioniert, dass an ihm Feuchtigkeit aus der Abluft auskondensiert. Feuchtigkeit kondensiert aus, wenn die relative Luftfeuchtigkeit der jeweils relevanten Luft 100% (in Worten: einhundert Prozent) erreicht ist. Die relative Luftfeuchtigkeit in Luft nimmt zu, wenn die Luft, wie in diesem Fall die warme Abluft, abkühlt. Andererseits nimmt die relative Luftfeuchte ab, wenn die Luft erwärmt wird. Diese physikalischen Effekte der Zu- bzw. Abnahme der Luftfeuchtigkeit sind im Mollier-h,x-Diagramm dargestellt. Das erfindungsgemäß angestrebte Auskondensieren findet vorzugsweise an der Trennfläche des Wärmeübertragers statt. Dazu gibt die Abluft so viel thermische Energie an der Trennfläche ab, dass die relative Luftfeuchtigkeit in der Abluft 100% (in Worten: einhundert Prozent) erreicht. Der Wärmeübertrager hat so vorteilhaft drei Funktionen. Die erste Funktion ist das Entfeuchten der Abluft, die durch den ersten Wärmeübertrager strömt. Die zweite Funktion ist das Aufheizen der zugeführten Frischluft. Die dritte Funktion ist das Verringern relativer Luftfeuchte der zugeführten Frischluft, bedingt durch das Aufheizen dieser Frischluft.

Mit dem Auskondensieren und der Art des Zuführens der Abluft von unten in den Wärmeübertrager wird darüber hinaus die oben genannte Selbstreinigung des Wärmeübertragers verbessert. Das auskondensierte Wasser bildet nämlich an der Trennfläche des Wärmeübertragers einen Flüssigkeitsstrom, der den dort sich anlagernden Staub in vorteilhafter Weise nach unten hin abspült. Dieser Effekt ist gerade dann besonders groß, wenn die Abluft unten zugeführt und damit der in den Wärmeübertrager frisch eingebrachte Staub sofort durch nach unten abströmendes Kondenswasser abgespült wird. Nachfolgend ist die Abluft dann weitgehend entstaubt und ihr restlicher Weg durch den Wärmeübertrager führt zu keiner größeren Gefahr von Verschmutzung oder Versottung.

Das derartige Durchströmen des Wärmeübertragers kann besonders stark zu Geltung kommen, wenn die abgeführte Abluft unten aus dem Wärmeübertrager abgeführt ist. Die Abluft strömt dann in mindestens zwei Abschnitten durch den Wärmeübertrager, insbesondere U-förmig von unten nach oben und wieder von oben nach unten. Dabei werden im ersten Abschnitt auf dem Hinweg große Staubpartikel aus der Abluft abgeschieden. Im zweiten Abschnitt werden auf dem Rückweg kleine Staubpartikel vorteilhaft von der Abluft mitgerissen. Diese werden so ebenfalls aus dem Wärmeübertrager ausgetragen und verschmutzen bzw. versotten diesen nicht.

Der Wärmeübertrager ist ferner mit zwei Abschnitten gestaltet, die zum einen von der Frischluft nacheinander zu durchströmen sind und zum anderen auch von der Abluft nacheinander zu durchströmen sind. Die beiden Abschnitte sind also sowohl hinsichtlich der Frischluft als auch hinsichtlich der Abluft in Reihe geschaltet. Dabei ist vorzugsweise ein erster Abschnitt als erstes von der Abluft und als zweites von der Frischluft zu durchströmen, während der zweite Abschnitt als zweites von der Abluft und als erstes von der Frischluft zu durchströmen ist. Mit der derartigen Schaltungsanordnung trifft im ersten Abschnitt kalte, nicht vorgewärmte Frischluft auf bereits abgekühlte Abluft, wohingegen im zweiten Abschnitt bereits vorgewärmte Frischluft auf noch nicht abgekühlte, heißte Abluft trifft. Damit kann insgesamt die Frischluft im zweiten Abschnitt an der heißen Abluft vergleichsweise stark aufgeheizt und der Abluft im ersten Abschnitt durch die kalte Frischluft vergleichsweise viel Wärme entzogen werden.

Ferner sind eine erste und eine zweite Sektion vorgesehen, die vom Gut in einer Transportrichtung nacheinander durchlaufen werden. Erfindungsgemäß sind die Frischluftzuführeinrichtung zum Zuführen von Frischluft als Zuluft in die erste Sektion, und die Abluftrückführeinrichtung zum Abführen von Abluft aus der zweiten Sektion und Rückführen als Zuluft zurück in die zweite Sektion gestaltet. Mit der derartigen Aufteilung von Sektionen wird die Abluft einer Sektion des Durchlauftrockners entnommen, in der diese Abluft stark mit Feuchtigkeit aufgesättigt aber noch vergleichsweise wenig heiß ist. Mit solcher Abluft kann der genannte Kondensationseffekt und der sich damit ergebende Wärmeentzug durch Phasenumwandlung besonders stark genutzt werden.

Alternativ sind die Frischluftzuführeinrichtung zum Zuführen von Frischluft als Zuluft in die zweite Sektion, und die Abluftrückführeinrichtung zum Abführen von Abluft aus der ersten Sektion und Rückführen als Zuluft zurück in die erste Sektion gestaltet. Die Abluft wird dann einem hinteren Teil des Durchlauftrockners entzogen, in dem diese Abluft nicht zwingend vollständig aufgesättigt aber in jedem Fall vergleichsweise heiß ist. Mit derartiger Abluft kann Frischluft auf eine relativ hohe Temperatur vorgewärmt werden.

An dem erfindungsgemäßen Durchlauftrockner ist ferner vorteilhaft ein Heizer vorgesehen, mittels dessen die Frischluft vor deren Zuführen als Zuluft aufzuheizen ist. Die zugeführte Frischluft kann so präzise auf die gewünschte Trocknungstemperatur geregelt werden.

Ferner ist an dem Durchlauftrockner gemäß der Erfindung vorzugsweise ein Heizer vorgesehen, mittels dessen die durch den Wärmeübertrager geführte Abluft vor deren Zuführen als Zuluft aufzuheizen ist. So kann auch die zurückgeführte Abluft hinsichtlich ihrer relativen Luftfeuchte verbessert und aufbereitet werden, bevor sie wieder in die jeweilige Sektion des Durchlauftrockners rückgeführt wird.

Vorteilhaft ist ferner in zumindest einer der Sektionen ein Abluft-Sensor vorgesehen, mittels dessen in der Abluft deren Feuchte zu ermitteln ist. Ein derartiger Luft-Sensor ermittelt insbesondere die relative Luftfeuchtigkeit und/oder die Temperatur der ihn an- oder umströmenden Luft. Vorteilhaft ist mittels des Abluft-Sensors so die relative Luftfeuchtigkeit der Abluft zu ermitteln. Wenn die relative Luftfeuchtigkeit der Abluft bekannt ist, kann mittels einer Steuerung definiert sein, ob diese Abluft zu entfeuchten ist oder ob diese Luft wieder direkt der jeweiligen Sektion bzw. dem jeweiligen Bereich zuzuführen ist.

Alternativ oder zusätzlich ist ferner ein Zuluft-Sensor vorgesehen, mittels dessen in der Zuluft deren Feuchte zu ermitteln ist. Der Zuluft-Sensor ermittelt die relative Luftfeuchtigkeit der anströmenden Zuluft. Vorteilhaft ist so zu ermitteln, mit welcher relativen Luftfeuchtigkeit die Zuluft in die jeweilige Sektion hineinströmt. Besonders vorteilhaft ist so auch zu ermitteln, ob und um wieviel Grad Celsius die Zuluft zusätzlich durch einen Heizer aufzuwärmen ist, um eine gewünschte relative Luftfeuchtigkeit in der Zuluft zu erreichen.

In bevorzugter Weise sind ferner zum Transportieren des Gutes durch den Durchlauftrockner zwei Bänder vorgesehen, die insbesondere der ersten Sektion sowie der zweiten Sektion zugeordnet sind. Ein derart zweigeteiltes Band in einem Durchlauftrockner ermöglicht es, dass jede der beiden Sektionen ein eigenes Band aufweist. So können die beiden Sektionen auch räumlich getrennt voneinander, insbesondere übereinander, angeordnet werden.

Ferner ist vorzugsweise auch eine Regeleinrichtung vorgesehen, mittels der die Feuchte in der Abluft zu messen und eine Luftführung in der Abluftrückführeinrichtung, im ersten Wärmeübertrager und/oder im zweiten Wärmeübertrager zu regeln ist. Eine Regeleinrichtung bzw. Steuerung wertet Eingänge der Regeleinrichtung aus und regelt bzw. steuert mittels einer Logik der Regeleinrichtung deren Ausgänge. Als Eingänge dienen hier elektrische Signale von Sensoren unterschiedlicher Art, wie beispielsweise einem Temperatursensor oder einem Feuchtesensor. Als Ausgänge dienen meist Schalter oder elektrische Signale, beispielsweise zum Steuern des Heizers. Mittels der Regeleinrichtung ist vorteilhaft die Luftführung, insbesondere mittels Ventilation, in der Abluftrückführeinrichtung an die jeweilig vorherrschende relative Luftfeuchte der Abluft anzupassen.

Die Erfindung ist auch auf ein Verfahren zum Betreiben eines Durchlauftrockners zum Trocknen eines Gutes mittels Warmluft gerichtet, bei dem Frischluft als Zuluft zugeführt und Abluft abgeführt und als Zuluft rückgeführt wird, sowie durch einen Wärmeübertrager zum einen Frischluft und zum anderen Abluft geführt wird, zum Übertragen von Abwärme der Abluft in die Frischluft. Dabei wird entsprechend der obigen Erläuterungen die abgeführte Abluft unten in den Wärmeübertrager zugeführt.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen stark vereinfachten Längsschnitt eines Durchlauftrockners gemäß dem Stand der Technik und
- Fig. 2: einen stark vereinfachten Längsschnitt eines erfindungsgemäßen Durchlauftrockners.

### Detaillierte Beschreibung des Ausführungsbeispiels

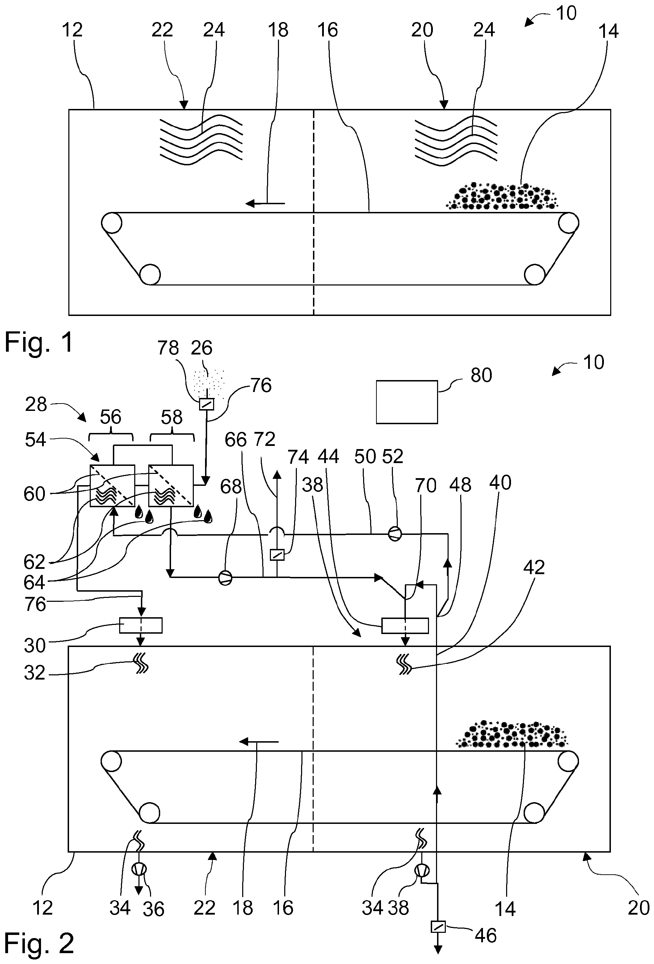

In den Fig. 1 und 2 ist je ein Durchlauftrockner 10 in Form eines Bandtrockners gezeigt. Der Durchlauftrockner 10 weist ein Gehäuse 12 auf, durch das zunächst feuchtes oder nasses Gut 14 mittels eines Bandes 16 in einer Transportrichtung 18 durch den Durchlauftrockner 10 hindurch zu transportieren ist.

Das Gut 14 durchläuft während des Transports zunächst eine erste Sektion 20 und danach eine zweite Sektion 22. Die beiden Sektionen 20 und 22 unterteilen das Gehäuse 12 räumlich. Sie sind in Transportrichtung gegebenenfalls mittels einer Trennwand oder mehreren Trennwänden luftströmungstechnisch weitgehend voneinander getrennt. Die Sektionen 20 und 22 können auch ihrerseits nochmals in Untersektionen unterteilt sein.

Innerhalb des Gehäuses 12 befindet sich Warmluft 24, die dem zu trocknenden Gut 14 (nicht dargestellte) Feuchtigkeit entzieht. Mit dem Entziehen von Feuchtigkeit aus dem Gut 14 wird das Gut 14 trockener, es wird getrocknet.

Fig. 2 veranschaulicht, wie bei dem dortigen, erfindungsgemäßen Durchlauftrockner 10 mittels Warmluft ein solches Gut 14 getrocknet wird. Zum Trocknen strömt Frischluft 26 von außerhalb in das Gehäuse 12, gefördert von einer Frischluftzuführeinrichtung 28. Die Frischluft 26 durchströmt einen ersten Heizer 30, der die Frischluft 26 auf ihrem Weg durch den Heizer 30 erwärmt. Mit dem Erwärmen der Frischluft 26 nimmt die relative Luftfeuchtigkeit der Frischluft 26 ab, die Frischluft 26 wird "trockener".

Diese Frischluft 26 wird nach dem Erwärmen als Zuluft 32 bezeichnet. Die Zuluft 32 strömt in die Sektion 22 und umströmt dort die einzelnen Partikel des Gutes 14 bzw. sie durchströmt die Schicht des Gutes 14 auf dem Band 16. Bei diesem Umströmen der Partikel des Gutes 14 nimmt die Zuluft 32 Feuchtigkeit aus dem Gut 14 auf. Die relative Luftfeuchtigkeit der Zuluft 32 steigt, die Zuluft 32 wird "feuchter". Die angefeuchtete Zuluft 32 wird nachfolgend aus der Sektion 22 als Abluft 34 mittels einer Abluftabführung 36 mit einem Ventilator aus dem Gehäuse 12 in dessen Umgebung abgeführt. Diese Abluft 34 stellt also Fortluft dar.

Bevor das Gut 14 in die zweite Sektion 22 gelangt, durchläuft es die erste Sektion 20. In der Sektion 20 wird unten Abluft 34 abgeführt. Diese Abluft 34 wird mittels einer Abluftrückführeinrichtung 38, die insbesondere einen Ventilator umfasst, zu einer Rückführleitung 40 geleitet. Durch die Rückführleitung 40 wird diese Abluft 34 wieder zum Großteil in die Sektion 20 als Zuluft 42 zurückgeführt.

An der Rückführleitung 40 kann eine Klappe 46 angeschlossen sein, durch die hindurch ein Teil der Abluft 34 direkt in die Umgebung des Durchlauftrockners 10 abgeführt werden kann.

Am Ausgang der Rückführleitung 40 ist ein Heizer 44 angeordnet, mittels dessem die rückgeführte Abluft 34 vor ihrem Wiedereintritt als Zuluft 42 in die Sektion 20 aufgewärmt werden kann. Der Heizer 44 kann, muss aber nicht zwingend vorgesehen sein. Alternativ kann der Heizer 44 auch eine vergleichsweise kleine Heizkapazität aufweisen. Die Abluft 34 aus der Sektion 20 wird also mittels der Abluftrückführeinrichtung 38 zum größten Teil direkt als Zuluft 42 in die Sektion 20 zurückgeführt.

Die Rückführleitung 40 weist ferner eine Abzweigung 48 auf, an der eine Leitung 50 angeschlossen ist. An der Abzweigung 48 wird ein Teil der Abluft 34 aus der Rückführleitung 40 abgezweigt und mittels der Leitung 50 abgeleitet. Dazu kann in der Leitung 50 ein getrennt zu regelnder, saugender Ventilator 52 angeordnet sein. Die Leitung 50 führt die abgezweigte Abluft zu einem Wärmeübertrager 54, und durch diesen hindurch.

Der Wärmeübertrager 54 umfasst zwei Abschnitte 56 und 58, die als solche je einen eigenständigen Wärmeübertrager bzw. Wärmetauscher darstellen und separat von wärmezuführender Luft sowie wärmeabführender Luft zu durchströmen sind.

Die beiden Abschnitte 56 und 58 des Wärmeübertragers 54 weisen je eine Trennfläche 60 auf, an der an einer Seite als wärmezuführende Luft die abgezweigte Abluft 34 aus der ersten Sektion 20 und an der anderen Seite als wärmeabführende Luft die Frischluft 26 entlanggeführt wird. An jeder der Trennflächen 60 geht so Wärme von der Abluft 34 als Abwärme 62 auf die Frischluft 26 über. Zugleich kondensiert mit dem Abkühlen der Abluft 34 an der Trennfläche 60 Wasser 64 aus der Abluft 34 aus.

Der Abschnitt 56 bildet den hier als ersten Abschnitt bezeichneten Teil des Wärmeübertragers 54. An ihm wird die abgeführte Abluft 34 mittels der Leitung 50 unten, insbesondere auch an der Unterseite von unten her, zugeführt. Die Abluft 34 steigt dann beim Strömen durch den Abschnitt 56 von unten nach oben auf. Zugleich kühlt die Abluft 34 an der zugehörigen Trennfläche 60 ab und das dort kondensierende Wasser 64 strömt entlang der Trennfläche 60 nach unten hin ab. Dieses Wasser 64 reist dabei aus der Abluft 34 stammende Staubpartikel mit sich, die sich sonst an der Trennfläche 60 ablagern würden.

Die Abluft 34 strömt oben, insbesondere auch an der Oberseite nach oben hin, aus dem Abschnitt 56 aus, wird dann U-förmig umgelenkt und strömt dann oben, insbesondere auch an der Oberseite von oben her, in den hier als zweiten Abschnitt bezeichneten Abschnitt 58 ein. Im zweiten Abschnitt 58 tritt nicht zwingend eine Kondensation von Wasser 64. Dort ist es daher vorteilhafter, wenn die Abluft 34 nach unten hin strömt und damit zugleich jene Staubpartikel mit sich reißt, die in der Abluft 34 enthalten. Diese Staubpartikel werden so zusammen mit der Abluft 34 aus dem Wärmeübertrager 54 ausgetragen, ohne diesen zu verschmutzen oder zu versotten.

Nachfolgend tritt die Abluft 34 dann unten, insbesondere auch an der Unterseite von unten her, aus dem zweiten Abschnitt 58 aus und strömt durch eine Rückführleitung 66 ab. Die Rückführleitung 66 leitet die derart abgekühlte und auskondensierte Luft als Zuluft 42 zurück in die erste Sektion 20. Dazu kann in der Rückführleitung 66 ein getrennt zu regelnder, saugender Ventilator 68 angeordnet sein. Die Rückführleitung 66 mündet an einer Einmündung 70 in Strömungsrichtung hinter der Abzweigung 48 in die Rückführleitung 40.

In Strömungsrichtung kurz hinter dem Ventilator 68 zweigt von der Rückführleitung 66 eine nach außen in die Umgebung des Durchlauftrockners 10 führende Leitung 72 mit einer darin angeordneten Klappe 74 ab. Diese Leitung 72 dient mit der zugeordneten Klappe 74 dazu, aus der Rückführleitung 66 abgekühlte Abluft 34 in die Umgebung abzuführen. Mit dem derartigen Abführen eines Teils der Abluft 34 in die Umgebung des Durchlauftrockners 10 entsteht in der Sektion 20 ein leichter Unterdruck. Zum Ausgleich dieses Unterdrucks wird aus der Umgebung des Durchlauftrockners 10 von außen Luft in die erste Sektion 20 hineingedrückt. Zugleich kann aus der Sektion 20 keine Luft und damit auch kein Staub nach außen austreten. Dieses Zuführen von Luft von außen in die Sektion 20 hinein verhindert also ein Verstauben der Umgebung des Durchlauftrockners 10.

Die Frischluft 26 wird mittels einer Zuleitung 76 durch den Wärmeübertrager 54 und, wie oben erläutert, durch den Heizer 30 hindurch in die zweite Sektion 22 geleitet. Dabei wird die Menge an derart zugeführter Zuluft 32 mittels einer Klappe 78 gesteuert, die in der Zuleitung 76 vor dem Wärmeübertrager 54 angeordnet ist.

Die Frischluft 26 strömt zunächst an der bezogen auf Fig. 2 rechten Seite seitlich an der zugehörigen Seitenfläche in den zweiten Abschnitt 58 des Wärmeübertragers 54 ein. Dort, im zweiten Abschnitt 58 ist die Abluft 34 bereits vergleichsweise stark abgekühlt. Die Abluft 34 kann aber dennoch Wärme auf die ebenfalls vergleichsweise kalte Frischluft 26 übertragen.

Die Frischluft 26 strömt danach an der gegenüberliegenden Seitenfläche aus dem zweiten Abschnitt 58 des Wärmeübertragers 54 aus und tritt seitlich in dessen ersten Abschnitt 56 über. Im ersten Abschnitt 56 ist die dort durchströmende Abluft 34 vergleichsweise heiß und kann ebenfalls vorteilhaft an die bereits im zweiten Abschnitt 58 vorgewärmte Frischluft 26 weitere Wärme abgeben.

Die derart aufgewärmte Frischluft 26 strömt dann aus dem ersten Abschnitt 56 seitlich an der bezogen auf Fig. 2 linken Seite aus und wird mittels der Zuleitung 76 weiter zum Heizer 30 transportiert.

Die genannten Klappen und Ventilatoren werden insgesamt mittels einer Steuerung 80 gesteuert und insbesondere geregelt, wobei diverse, mit der Steuerung 76 gekoppelte (nicht dargestellte) Messeinrichtungen und Sensoren vorgesehen sein können.

### Bezugszeichenliste

- 10: Durchlauftrockner
- 12: Gehäuse
- 14: Gut
- 16: Band
- 18: Transportrichtung
- 20: erste Sektion
- 22: zweite Sektion
- 24: Warmluft
- 26: Frischluft
- 28: Frischluftzuführeinrichtung
- 30: Heizer
- 32: Zuluft
- 34: Abluft
- 36: Abluftabführung
- 38: Abluftrückführeinrichtung
- 40: Rückführleitung
- 42: Zuluft
- 44: Heizer
- 46: Klappe
- 48: Abzweigung
- 50: Leitung
- 52: Ventilator
- 54: Wärmeübertrager
- 56: Abschnitt des Wärmeübertragers
- 58: Abschnitt des Wärmeübertragers
- 60: Trennfläche
- 62: Abwärme
- 64: Wasser
- 66: Rückführleitung
- 68: Ventilator
- 70: Einmündung
- 72: Leitung
- 74: Klappe
- 76: Zuleitung
- 78: Klappe
- 80: Steuerung

## Patentansprüche

1. Durchlauftrockner (10) zum Trocknen eines Gutes mittels Warmluft mit einer Frischluftzuführeinrichtung (28) zum Zuführen von Frischluft (26) als Zuluft (32), einer Abluftrückführeinrichtung (38) zum Abführen von Abluft (34) und Rückführen als Zuluft (42) und einem Wärmeübertrager (54), durch den hindurch zum einen Frischluft (26) und zum anderen Abluft (34) geführt sind, zum Übertragen von Abwärme der Abluft (34) in die Frischluft (26),
wobei die abgeführte Abluft (34) unten in den Wärmeübertrager (54) zugeführt ist, und der Wärmeübertrager (54) einen ersten und einen zweiten Abschnitt (56, 58) umfasst, wobei die beiden Abschnitte (56, 58) je eine Trennfläche (60) aufweisen, an der an einer Seite als wärmezuführende Luft die abgezweigte Abluft (34) und an der anderen Seite als wärmeabführende Luft die Frischluft (26) entlanggeführt wird, wobei durch den ersten Abschnitt (56) die abgeführte Abluft (34) von unten nach oben zu strömen ist und zugleich die Abluft (34) an der Trennfläche (60) abgekühlt ist und ein dort kondensierendes Wasser (64) entlang der Trennfläche (60) nach unten hin abzuströmen ist sowie die Abluft (34) oben aus dem ersten Abschnitt (56) auszuströmen ist, dann U-förmig umgelenkt ist und dann oben in den zweiten Abschnitt (58) einzuströmen ist, wobei eine erste und eine zweite Sektion (20, 22) vorgesehen sind, die vom Gut (14) in einer Transportrichtung (18) nacheinander durchlaufen werden,
**dadurch gekennzeichnet,**
**dass** die Frischluftzuführeinrichtung (28) zum Zuführen von Frischluft (26) als Zuluft in die erste Sektion (20), und die Abluftrückführeinrichtung (38) zum Abführen von Abluft (34) aus der zweiten Sektion (22) und Rückführen als Zuluft zurück in die zweite Sektion (22) gestaltet sind, oder
**dass** die Frischluftzuführeinrichtung (28) zum Zuführen von Frischluft (26) als Zuluft (32) in die zweite Sektion (22), und die Abluftrückführeinrichtung (38) zum Abführen von Abluft (34) aus der ersten Sektion (20) und Rückführen als Zuluft (42) zurück in die erste Sektion (20) gestaltet sind.

2. Durchlauftrockner nach Anspruch 1,
**dadurch gekennzeichnet, dass** der Wärmeübertrager (54) derart dimensioniert ist, dass an ihm Wasser (64) aus der Abluft (34) auskondensiert.

3. Durchlauftrockner nach Anspruch 1 oder 2,
**dadurch gekennzeichnet, dass** die abgeführte Abluft (34) unten aus dem Wärmeübertrager (54) abgeführt ist.

4. Durchlauftrockner nach einem der Ansprüche 1 bis 3,
**dadurch gekennzeichnet, dass** der Wärmeübertrager (54) mit zwei Abschnitten (56, 58) gestaltet ist, die von der Frischluft (26) nacheinander zu durchströmen sind und von der Abluft (34) nacheinander zu durchströmen sind.

5. Durchlauftrockner nach Anspruch 4,
**dadurch gekennzeichnet, dass** der erste Abschnitt (56) als erstes von der Abluft (34) und als zweites von der Frischluft (26) zu durchströmen ist, während der zweite Abschnitt (58) als zweites von der Abluft (34) und als erstes von der Frischluft (26) zu durchströmen ist.

6. Durchlauftrockner nach einem der Ansprüche 1 bis 5, **dadurch gekennzeichnet, dass** ein Heizer (30) vorgesehen ist, mittels dessen die Frischluft (26) vor deren Zuführen als Zuluft (32) aufzuheizen ist.

7. Durchlauftrockner nach einem der Ansprüche 1 bis 6, **dadurch gekennzeichnet, dass** ein Heizer (44) vorgesehen ist, mittels dessen die durch den Wärmeübertrager (54) geführte Abluft (34) vor deren Zuführen als Zuluft (42) aufzuheizen ist.

8. Verfahren zum Betreiben eines Durchlauftrockners (10) nach einem der vorhergehenden Ansprüche, zum Trocknen eines Gutes (14) mittels Warmluft (24) bei dem Frischluft (26) als Zuluft (32) zugeführt und Abluft (34) abgeführt und als Zuluft (42) rückgeführt wird, sowie durch einen Wärmeübertrager (54) zum einen Frischluft (26) und zum anderen Abluft (34) geführt wird, zum Übertragen von Abwärme der Abluft (34) in die Frischluft (26),
wobei die abgeführte Abluft (34) unten in den Wärmeübertrager (54) zugeführt wird und der Wärmeübertrager (54) zwei Abschnitte (56, 58) umfasst,
**dadurch gekennzeichnet, dass** der Abschnitt (56) einen ersten Abschnitt (56) bildet, durch den die abgeführte Abluft (34) von unten nach oben strömt und zugleich die Abluft (34) an einer zugehörigen Trennfläche (60) abkühlt und ein dort kondensierendes Wasser (64) entlang der Trennfläche (60) nach unten hin abströmt sowie die Abluft (34) oben aus dem ersten Abschnitt (56) ausströmt, dann U-förmig umgelenkt wird und dann oben in den als zweiten Abschnitt (58) bezeichneten Abschnitt (58) einströmt.

## Claims

1. Continuous flow drier (10) for drying a material by means of hot air, having a fresh air supply device (28) for supplying fresh air (26) as supply air (32), an exhaust air recirculation device (38) for removing exhaust air (34) and recirculating it as supply air (42), and a heat exchanger (54) through which on the one hand fresh air (26) and on the other hand exhaust air (34) are guided, for transferring waste heat of the exhaust air (34) into the fresh air (26), wherein the removed exhaust air (34) is fed into the heat exchanger (54) at the bottom, and the heat exchanger (54) comprises a first and a second portion (56, 58), wherein the two portions (56, 58) each have a separating surface (60) along which there is guided on one side the branched-off exhaust air (34) as heat-supplying air and on the other side the fresh air (26) as heat-removing air, wherein the removed exhaust air (34) is to flow through the first portion (56) from bottom to top and at the same time the exhaust air (34) is cooled at the separating surface (60) and water (64) that condenses there is to flow downwards along the separating surface (60), and the exhaust air (34) is to flow out of the first portion (56) at the top and is then deflected in a U-shape and is then to flow into the second portion (58) at the top, wherein there are provided a first and a second section (20, 22) through which the material (14) passes in succession in a transport direction (18),
**characterised in that** the fresh air supply device (28) is configured to supply fresh air (26) as supply air into the first section (20) and the exhaust air recirculation device (38) is configured to remove exhaust air (34) from the second section (22) and recirculate it as fresh air back into the second section (22), or
**in that** the fresh air supply device (28) is configured to supply fresh air (26) as supply air (32) into the second section (22) and the exhaust air recirculation device (38) is configured to remove exhaust air (34) from the first section (20) and recirculate it as fresh air (42) back into the first section (20).

2. Continuous flow drier according to claim 1,
**characterised in that** the heat exchanger (54) is so dimensioned that water (64) from the exhaust air (34) condenses out thereon.

3. Continuous flow drier according to claim 1 or 2,
**characterised in that** the removed exhaust air (34) is removed from the heat exchanger (54) at the bottom.

4. Continuous flow drier according to any one of claims 1 to 3,
**characterised in that** the heat exchanger (54) is configured with two portions (56, 58) through which the fresh air (26) is to flow in succession and through which the exhaust air (34) is to flow in succession.

5. Continuous flow drier according to claim 4,
**characterised in that** firstly the exhaust air (34) and secondly the fresh air (26) is to flow through the first portion (56), while secondly the exhaust air (34) and firstly the fresh air (26) is to flow through the second portion (58).

6. Continuous flow drier according to any one of claims 1 to 5,
**characterised in that** a heater (30) is provided, by means of which the fresh air (26) is to be heated before it is supplied as supply air (32).

7. Continuous flow drier according to any one of claims 1 to 6,
**characterised in that** a heater (44) is provided, by means of which the exhaust air (34) guided through the heat exchanger (54) is to be heated before it is supplied as supply air (42).

8. Method of operating a continuous flow drier (10) according to any one of the preceding claims, for drying a material (14) by means of hot air (24), in which fresh air (26) is supplied as supply air (32) and exhaust air (34) is removed and recirculated as supply air (42), and on the one hand fresh air (26) and on the other hand exhaust air (34) are guided through a heat exchanger (54) for transferring waste heat of the exhaust air (34) into the fresh air (26),
wherein the removed exhaust air (34) is fed into the heat exchanger (54) at the bottom, and the heat exchanger (54) comprises two portions (56, 58), **characterised in that** the portion (56) forms a first portion (56) through which the removed exhaust air (34) flows from bottom to top and at the same time the exhaust air (34) is cooled at an associated separating surface (60) and water (64) that condenses there flows downwards along the separating surface (60), and the exhaust air (34) flows out of the first portion (56) at the top, is then deflected in a U-shape and then flows into the section (58) referred to as the second section (58) at the top.

## Revendications

1. Séchoir continu (10) pour le séchage d'une marchandise au moyen d'air chaud à l'aide d'un dispositif d'amenée d'air neuf (28) servant à amener de l'air neuf (26) comme air amené (32), d'un dispositif d'évacuation d'air extrait (38) servant à évacuer l'air extrait (34) et à le réintroduire sous la forme d'air amené (42) et d'un échangeur thermique (54) à travers lequel d'une part l'air neuf (26) et d'autre part l'air extrait (34) sont conduits, pour transmettre la chaleur dissipée de l'air extrait (34) à l'air neuf (26);
l'air extrait évacué (34) est amené par-dessous dans l'échangeur thermique (54) et l'échangeur thermique (54) comprend une première et une deuxième section (56, 58) ; les deux sections (56, 58) comportant respectivement une surface de séparation (60) au niveau de laquelle l'air extrait (34) dérivé est amené au niveau d'un côté sous la forme d'air amenant de la chaleur et au niveau de laquelle l'air neuf (26) est amené de l'autre côté sous la forme d'air caloporteur, l'air extrait évacué (34) s'écoulant de bas en haut à travers la première section (56), amenant simultanément l'air extrait (34) à se refroidir au niveau de la surface de séparation (60) et faisant que l'eau (64) se condensant à cet endroit s'écoule vers le bas le long de la surface de séparation (60) et l'air extrait (34) étant évacué par en haut hors de la première section (56), puis dévié en forme de U et amené ensuite par-dessus dans la deuxième section (58), une première et une deuxième section (20, 22) étant prévues, ces sections étant parcourues l'une après l'autre par la marchandise (14), dans une direction de transport (18) ; **caractérisé en ce que** :
le dispositif d'amenée d'air neuf (28) est agencé pour amener de l'air neuf (26) comme air amené dans la première section (20) et le dispositif d'évacuation d'air extrait (38) est agencé pour évacuer l'air extrait (34) hors de la deuxième section (22) et pour le réintroduire sous la forme d'air amené dans la deuxième section (22) ; ou
le dispositif d'amenée d'air neuf (28) est agencé pour amener de l'air neuf (26) comme air amené (32) dans la deuxième section (22) et le dispositif d'évacuation d'air extrait (38) est agencé pour évacuer l'air extrait (34) hors de la première section (20) et pour le réintroduire sous la forme d'air amené (42) dans la première section (20).

2. Séchoir continu selon la revendication 1, **caractérisé en ce que** l'échangeur thermique (54) est dimensionné de telle sorte que l'eau (64) provenant de l'air extrait (34) se condense à son contact.

3. Séchoir continu selon la revendication 1 ou 2, **caractérisé en ce que** l'air extrait évacué (34) est évacué par-dessous hors de l'échangeur thermique (54).

4. Séchoir continu selon l'une quelconque des revendications 1 à 3, **caractérisé en ce que** l'échangeur thermique (54) est agencé avec deux sections (56, 58) traversées l'une après l'autre par l'air neuf (26) et traversées l'une après l'autre par l'air extrait (34).

5. Séchoir continu selon la revendication 4, **caractérisé en ce que** la première section (56) est traversée en premier par l'air extrait (34) et en deuxième par l'air neuf (26) tandis que la deuxième section (58) est traversée en deuxième par l'air extrait (34) et en premier par l'air neuf (26).

6. Séchoir continu selon l'une quelconque des revendications 1 à 5, **caractérisé en ce qu'**un chauffage (30) est prévu à l'aide duquel l'air neuf (26) est chauffé avant d'être amené sous la forme d'air amené (32).

7. Séchoir continu selon l'une quelconque des revendications 1 à 6, **caractérisé en ce qu'**un chauffage (44) est prévu à l'aide duquel l'air extrait (34) guidé à travers l'échangeur thermique (54) est chauffé avant d'être amené sous la forme d'air amené (42).

8. Procédé d'exploitation d'un séchoir continu (10) selon l'une quelconque des revendications précédentes, pour le séchage d'une marchandise (14) au moyen d'air chaud (24) dans lequel l'air neuf (26) est amené comme air amené (32) et l'air extrait (34) est évacué et réintroduit sous la forme d'air amené (42), d'une part l'air neuf (26) et d'autre part l'air extrait (34) étant guidés à travers un échangeur thermique (54) pour transmettre la chaleur dissipée de l'air extrait (34) à l'air neuf (26) ;
l'air extrait évacué (34) étant amené par-dessous dans l'échangeur thermique (54) et l'échangeur thermique (54) comprenant deux sections (56, 58) ;
**caractérisé en ce que** la section (56) forme une première section (56) à travers laquelle l'air extrait évacué (34) s'écoule de bas en haut, amenant simultanément l'air extrait (34) à se refroidir au niveau de la surface de séparation (60) correspondante, faisant que l'eau (64) se condensant à cet endroit s'écoule vers le bas le long de la surface de séparation (60) et l'air extrait (34) étant évacué par en haut hors de la première section (56), puis dévié en forme de U et amené ensuite par-dessus dans la section (58) appelée deuxième section.
